# EUROPÄISCHE PATENTSCHRIFT

(11) **EP 3 174 660 B1**
(45) Veröffentlichungstag und Bekanntmachung des Hinweises auf die Patenterteilung: **20.03.2019**
(21) Anmeldenummer: 15734297.3
(22) Anmeldetag: 01.07.2015
(51) Int. Cl.: B23K 11/00, F16B 5/04, F16B 19/08, B23K 11/11, F16B 33/00, F16B 19/04

(54) **VERFAHREN ZUM FÜGEN ZUMINDEST ZWEIER BAUTEILE**
METHOD FOR JOINING AT LEAST TWO STRUCTURAL PARTS
PROCÉDÉ SERVANT À ASSEMBLER AU MOINS DEUX COMPOSANTS

(30) Priorität: 02.08.2014 DE 102014011599
(43) Veröffentlichungstag der Anmeldung: 07.06.2017
(73) Patentinhaber: Audi AG, 85045 Ingolstadt (DE)
(72) Erfinder: KOTSCHOTE, Christian, 06366 Kothen (DE); NEUDEL, Christian, 08626 Adorf/Vogtland (DE); BÄR, Christian, 85049 Ingolstadt (DE)
(86) Internationale Anmeldenummer: PCT/EP2015/001328
(87) Internationale Veröffentlichungsnummer: WO 2016/020025

(56) Entgegenhaltungen:
- EP-A1- 2 127 797
- EP-A1- 2 722 124
- WO-A1-2011/023616

## Beschreibung

Die Erfindung betrifft ein Fügehilfselement nach dem Oberbegriff des Patentanspruches 1.

Im Automobilbau kann die Fahrzeug-Karosserie in einer Mischbauweise gefertigt werden, bei der zum Beispiel Aluminiumhalbzeuge und Stahlhalbzeuge zusammengefügt werden. Die Halbzeuge können dabei bevorzugt durch ein mechanisches Fügeverfahren (das heißt ohne Gefügeumwandlung) miteinander verbunden werden, etwa einem Halbhohlstanznieten, bei dem ein Halbhohlstanznietelement beim Nietvorgang das in der Nietrichtung erste Bauteil durchstößt und in das zweite Bauteil eingetrieben wird, beispielsweise unter Aufrechterhaltung einer Restmaterialstärke im zweiten Bauteil. Ein solches Halbhohlstanznieten ist beispielhaft in der EP 231 4890 A2 beschrieben. Das Halbhohlstanznieten bietet bei höchstfesten Stählen keine ausreichende Fügequalität aufgrund der sehr hohen Werkstofffestigkeiten des Stahls. So kann der Niet beschädigt oder nicht ausreichend umgeformt werden.

Alternativ zum obigen Halbhohlstanznieten kann ein Widerstandselementschweißen Anwendung finden, bei dem in einem Setzschritt ein bolzenähnliches Fügehilfselement in ein erstes Bauteil (zum Beispiel ein Aluminiumhalbzeug) eingestanzt wird und das erste Bauteil bodenseitig durchstößt. Das Fügehilfselement wirkt im Aluminiumwerkstoff des ersten Bauteils als Schweißeinlage, mit der ein zweites Bauteil (zum Beispiel ein Stahlhalbzeug) verschweißbar ist. Im folgenden Schweißschritt wird die vom Elementkopf des Fügehilfselementes abgewandte, bodenseitig im ersten Bauteil freigelegte Stirnseite (das heißt der Elementfuß des Fügehilfselements) mit dem zweiten Bauteil (das heißt dem Stahlhalbzeug) verschweißt. Ein solches Widerstandselementschweißen ist beispielhaft aus der DE 10 2004 025 492 A1 bekannt.

Die oben angegebenen herkömmlichen Fügeverfahren, nämlich Halbhohlstanznieten oder Widerstandselementschweißen, weisen diverse Nachteile und Einschränkungen auf: So bleibt der Elementkopf des Fügehilfselementes auch nach der Fertigstellung der Fügeverbindung sichtbar und ragt dieser mit einem Kopfüberstand über die Bauteil-Oberfläche vor. Zudem kann sich zwischen dem Elementkopf des Fügehilfselementes und dem daran anliegenden Bauteil ein Spalt bilden, der unter mechanischer Belastung gegebenenfalls größer wird und durch den unter Umständen korrosive Medien eindringen können. Beim Widerstandsschweißen fließt der Schweißstrom direkt an das Fügehilfselement und das Stahlhalbzeug. Durch einen gegebenenfalls vorhandenen Versatz oder ein exzentrisches auftreffen der Schweißelektroden auf das Fügehilfselement ändert sich die Stromflussrichtung, wodurch ein Nebenschluss zwischen dem Stahlhalbzeug und dem Aluminiumhalbzeug entstehen kann. Dadurch steht für die Ausbildung einer Schweißlinse nicht mehr genügend Wärme zur Verfügung, wodurch sich eine reduzierte Verbindungsausbildung ergeben kann. Zusätzlich führt ein Winkel- oder Lateralversatz der Punktschweißelektroden zu einer Schieflage des Fügehilfselementes.

Aus der EP 2 722 124 A1 ist ein gattungsgemäßes Fügehilfselement für ein Verfahren zum Fügen zumindest zweier Bauteile bekannt. Aus der WO 2011/023616 A1 und aus der EP 2 127 797 A1 sind weitere Fügehilfselemente für Fügeverfahren bekannt.

Die Aufgabe der Erfindung besteht darin, ein Fügehilfselement für ein Verfahren zum Fügen zumindest zweier Bauteile bereitzustellen, bei dem in prozess- und fertigungstechnischer einfacher Weise eine betriebssichere Verbindung der beiden Bauteile ermöglicht ist.

Die Aufgabe ist durch die Merkmale des Patentanspruches 1 gelöst. Bevorzugte Weiterbildungen der Erfindung sind in den abhängigen Ansprüchen offenbart.

Im erfindungsgemäßen Verfahren wird in einem Setzschritt ein Fügehilfselement in ein erstes Bauteil eingetrieben, und zwar unter Aufrechterhaltung einer Restmaterialstärke im ersten Bauteil. In einem darauffolgenden Fügeschritt (zum Beispiel ein Schweißschritt oder ein Klebeschritt) wird das in das erste Bauteil eingetriebene Fügehilfselement mit dem zweiten Bauteil stoffschlüssig verbunden, das heißt verschweißt oder verklebt. Das Fügehilfselement ist dabei erfindungsgemäß ähnlich wie ein Halbhohlnietelement aufgebaut, und zwar mit einem hohlen Elementschaft, der in das erste Bauteil eingetrieben wird, und einen Elementkopf, der mit dem zweiten Bauteil stoffschlüssig verbunden wird, das heißt verschweißt oder verklebt wird.

Zudem kann zwischen dem ersten und zweiten Bauteil zusätzlich Klebstoff aufgebracht werden, wie es im Fahrzeugbau beim Verbinden von Aluminium- und Stahl-Bauteilen gängige Praxis ist. Durch einen definierten Kopfüberstand des Fügehilfselements kann der Klebstoff lokal verdrängt, was zu einem verbesserten Schweißergebnis führt.

Das erfindungsgemäße Fügehilfselement wird also nicht als ein Nietelement in einem Nietprozess verwendet. Ein Nietprozess zeichnet sich dadurch aus, dass mittels des Nietelements mehrere Bauteile zusammengefügt werden.

Beim erfindungsgemäßen Verfahren wird dagegen nur das Fügehilfselement in vorzugsweise ein Blech/Bauteil eingestanzt und ist dieses dadurch nicht mehr als Niet zu sehen. Zudem wird im erfindungsgemäßen Verfahren das Fügehilfselement mindestens einmal, bevorzugt ein zweites Mal durch den Schweißprozess, umgeformt. Beim Nieten erfolgt nur ein einmaliges Umformen des Halbhohlstanznietes.

Im Unterschied zu den gängigen Fügemethoden wird somit das Fügehilfselement zwischen den beiden Bauteilen eingebracht, und zwar von außen sichtgeschützt sowie geschützt vor äußeren mechanischen Belastungen. Im Gegensatz zum herkömmlichen Halbhohlstanznieten wird erfindungsgemäß das Fügehilfselement vorzugsweise in einem einzigen Bauteil eingestanzt. Es liegt somit im Unterschied zum Stand der Technik eine deutlich reduziertere Blechdicke für den Einstanzprozess vor. Dies führt bei Verwendung von handelsüblichen Halbhohlstanznieten zu Problemen, da diese nicht für die Nutzung als Schweißelement, also auf thermische Belastung, ausgelegt sind. Zudem sind die handelsüblichen Halbhohlstanznieten nicht für einen solchen Einstanzprozess mit stark reduzierter, verfügbarer Gesamtblechdicke ausgelegt, wodurch die mechanische Belastung beim Einstanzen des Halbhohlstanznietes zu Rissen oder zu ungleichmäßigen Verspreizungen und/oder sehr geringen Restbodendicke führen kann.

Zur Vermeidung dieser Probleme ist das erfindungsgemäße Fügehilfselement im Hinblick auf den Werkstoff, die Geometrie, die Beschichtung, die Festigkeit und/oder die beim Setzschritt (Einstanzprozess) verwendete Matrize ausgelegt. Im Hinblick auf den Werkstoff des Fügehilfselementes kann bevorzugt ein Kaltstauch- oder ein Kaltfließpressstahl verwendet werden. Dadurch ist eine wirtschaftliche Fertigung durch einen möglichen Kaltschlagprozess gewährleistet. Zudem kann der Werkstoff einen wesentlich geringeren Kohlenstoffgehalt als ein bei handelsüblichen Halbhohlnietelement verwendeter Nietwerkstoff aufweisen. Der verwendete Werkstoff muss zudem schweißgeeignet sein. Beispielhaft sind die folgenden Materialien geeignet: 17MnB4, 19MnB4, 20MnB4, 27MnB4. Mittels solcher Werkstoffe kann das Verformungsverhalten des Fügehilfselements verbessert und Risse im Element vermieden werden. Im Hinblick auf die Geometrie ist die Materialstärke im Elementkopf gegenüber der Materialstärke in der Elementschaftwandung beträchtlich erhöht, wodurch sich im Elementkopf eine Materialverdickung ergibt, mit der ausreichend Schweißmaterial zur Bildung der Schweißlinse zwischen dem Elementkopf und dem zweiten Bauteil bereitstellbar ist. Beispielhaft kann die Kopfseitenhöhe des Elementkopfes so klein wie möglich gefertigt sein, damit der Spalt zwischen dem ersten Bauteil (Aluminium) und dem zweiten Bauteil (Stahlblech) gezielt eingestellt werden kann. Die Kopfhöhe in der Mitte des Fügehilfselementes (das heißt entlang dessen Längsachse) ist zwischen 1 und 1,5 mm, vorzugsweise 1,3 mm, sein, um die Ausbildung der Schweißlinse und eine ausreichende Schweißlinsentiefe im zweiten Bauteil (Stahlelement) zu realisieren. Die beim Schweißprozess entstehende Wärme im zweiten Bauteil ist dadurch deutlich geringer als bei Verwendung von handelsüblichen Halbhohlstanznieten. Zudem kann beim Schweißschritt ein Durchsacken der Schmelze in das erste Bauteil (Aluminiumblech) unterbunden werden. Die Beeinträchtigung des Werkstoffes des ersten Bauteils ist somit auf ein Minimum begrenzbar.

Der Kopfdurchmesser des Fügehilfselementes liegt zwischen 5 und 7 mm, vorzugsweise bei 5,5 mm. Ein solcher Durchmesser ist erforderlich, um eine ausreichend große Kontaktfläche für die beim Schweißschritt am Fügehilfselement aufgesetzten Elektrodenkappen zu gewährleisten. Zusätzlich können mit dem obigen Kopfdurchmesser die Toleranzen beim Winkel- und Lateralversatz der Schweißelektroden abgefangen werden. Die Schaftaußendurchmesser des Elementschaftes liegt zwischen 3 und 6,5 mm, vorzugsweise bei 3,3 mm. Besonders bevorzugt kann der Kopfdurchmesser ähnlich wie bei einem Halbhohlstanzniet ausgelegt sein. Die Außenkontur des erfindungsgemäßen Fügehilfselements entspricht in etwa der Außenkontur eines Halbhohlstanznietes, so dass bei der Fertigung die gleichen Anlagen verwendet werden können. Das heißt es müssen keine neuen Betriebsmittel entwickelt werden. Die Geometrie kann dabei je nach Anwendungsfall oder unter den Umständen neuer Anlagentechniken variieren.

Die Oberseite des Elementkopfes des Fügehilfselementes kann in einer Ausführungsform planparallel ausgeführt sein. Alternativ dazu kann der Elementkopf des Fügehilfselementes an seiner Oberseite zumindest teilweise nach oben kalottenförmig ausgebaucht sein, und zwar unter Bildung der oben erwähnten Materialverdickung. Je nach erforderlichem Anwendungsfall sind beliebige Formen/Geometrien denkbar, die sich auch beim Buckelschweißen bewährt haben, etwa kalottenförmig, kugelförmig spitzig, eckig, etc. Der Stromfluss und damit auch die Ausbildung der Schweißlinse kann somit gezielt gesteuert bzw. ausgebildet werden.

Erfindungsgemäß bildet sich die Schweißlinse zentral zwischen dem Fügehilfselement und der Innenseite des zweiten Bauteils (Stahlblech) aus. Damit können die Nachteile einer exzentrischen stoffschlüssigen Verbindung, sowie eine schlechte Linsenausbildung, Schrägstellung des Fügehilfselementes, Poren- und Hohlraumbildung und an isotope Festigkeitseigenschaften, reduziert werden. Der Durchmesser der obigen kalottenförmigen Materialverdickung kann kleiner sein als der Elementkopfdurchmesser und auch nur so hoch bemessen sein, dass ein noch zulässiger Spalt zwischen den beiden Bauteilen entsteht.

Der Schaftaußendurchmesser beträgt zwischen 3 und 6,5 mm. Bei kleineren Flanschbreiten in der Karosserie kann bevorzugt der untere und bei höheren Verbindungsfestigkeiten vorzugsweise der obere Grenzwert des Schaftdurchmessers gewählt sein. Die Elementlänge des Fügehilfselementes entlang dessen Längsachse liegt je nach Blechdicke des ersten Bauteils (Aluminiumblech) zwischen 2,0 und 4,0 mm. Dadurch ist gewährleistet, dass beim Einstanzen des Fügehilfselementes (Setzschritt) ein ausreichender Hinterschnitt erzeugt wird.

Das Fügehilfselement kann an seinem, dem Elementkopf abgewandten Elementfuß eine Ringkontur aufweisen. Die Ringkontur kann bevorzugt durch eine ringförmig umlaufende spitzwinklige Aufsetzkante gebildet sein, die beim Setzschritt als eine Fußschneide wirkt. Diese ist bevorzugt spitzwinklig auszulegen, um eine frühzeitige Verformung des Fügehilfselementes zu unterbinden. Dadurch können besonders kleine Matrizendurchmesser von 5 bis 7,5 mm eingesetzt werden.

Die Fügehilfselementbeschichtung kann bevorzugt aus Zink bestehen. Die Schichtdicke sollte dabei auf ein Minimum begrenzt sein, bevorzugt auf eine Schichtdicke von 5 µm. Die Beschichtung wirkt als Korrosionsschutz speziell auch bei der Lagerung der Fügehilfselemente. Alternativ zu einer Zinkschicht kann auch eine Zink-Nickelverbindung oder Almac verwendet werden. Ergänzend sind bei Bedarf weitere Beschichtungen, wie eine Zink-Lamellen-Beschichtung und andere, sowie unbeschichtete Schweißelemente denkbar.

Die Werkstofffestigkeit des Fügehilfselementes sollte dem Anwendungsfall und den Materialien angepasst werden und liegt zwischen 950 und 1100 N/mm², damit das Fügehilfselement im Setzschritt in den Aluminiumwerkstoff des ersten Bauteils einschneiden kann und zugleich noch ausreichend duktil ist für eine Verformung im Aluminiummaterial.

Für das Einpressen des Fügehilfselementes in das erste Bauteil (vorzugsweise ein Aluminiumblech) wird eine spezielle Flachmatrize mit besonders kleiner Matrizengravur verwendet. Dabei ist die Tiefe auf ein Minimum zu reduzieren und dennoch ein ausreichendes Volumen für die Verdrängung des ersten Bauteils vorhanden. Auf diese Weise kann sich das Fügehilfselement im Setzschritt optimal verformen. Die reduzierten Abmessungen der Matrize verringern die Sichtbarkeit der Nietstelle von außen, was wiederum zu einer Erweiterung des Anwendungsbereiches führt. Gegebenenfalls kann auch eine Matrize ohne Gravur (das heißt ein Amboss) verwendet werden. Die Matrize nimmt aufgrund ihrer Geometrie Einfluss auf den Schweißprozess. Deshalb ist es unter Umständen notwendig, von der Flachmatrize auf eine andere Form, wie zum Beispiel Kugel- oder Dornmatrize, zu wechseln. Beispielhaft kann der Durchmesser der Matrizengravur zwischen 4 und 8 mm, vorzugsweise 5,5 mm, und die Tiefe zwischen 0 bis 1 mm, vorzugsweise 0,5 mm liegen.

Die Erfindung ist nicht auf die oben angegebenen Aspekte beschränkt. So ist auch eine Mehrblechverbindungen denkbar, und zwar zum Beispiel mit mehreren Stahlblechen. Alternativ kann das Fügehilfselement in zwei Aluminiumblechen eingetrieben werden und dann mit einem oder mehreren Stahlblechen verschweißt werden. Ergänzend kann das Elemente auch in einen nicht so hochfesten Stahl und Aluminium eingestanzt und anschließend an weiteren höher festen Stahlbauteilen geschweißt werden.

Zudem ist hervorzuheben, dass das Fügehilfselement nach dem Setzprozess bevorzugt ein Elementkopfüberstand zum Aluminiumblech aufweisen sollte, um den Schweißprozess, analog Buckelschweißen, zu verbessern. Der Kopfüberstand sollte so gewählt werden, dass eine reproduzierbare Schweißlinse erzeugbar ist. Bei zu kleinen Kopfüberständen kommt es zum Nebenschluss beim Schweißen und bei zu großen Überständen zu Schieflagen des Elements oder zu vermehrten Schweißspritzern. Bei dem hier vorgestellten Fügehilfselement ist bevorzugt ein Kopfüberstand von 0,3 - 0,5 mm einzustellen. Dieser kann aber nach Änderung der Elementgeometrie anders ausfallen.

Im Schweißprozess können verschiedene Elektrodenkappen (Form F, A, C oder andere) genutzt werden, bevorzugt zum Beispiel Elektrodenkappen, der Form F, mit einer Auflagefläche zum Fügeteil zwischen 4 bis 10 mm. Jedoch sind auch beliebig andere Kappen sowie eine Kombination aus verschiedenen Formen denkbar.

Die Erfindung und ihre vorteilhaften Aus- und Weiterbildungen sowie deren Vorteile werden nachfolgend von Zeichnungen näher erläutert.

Es zeigen:
- Fig. 1: in einer Teilschnittdarstellung eine Bauteilverbindung;
- Fig. 2: in einer teilweisen Seitenschnittdarstellung ein Fügehilfselement in Alleinstellung;
- Fig. 3: eine Detailansicht aus der Fig. 2;
- Fig. 4: in einer Ansicht entsprechend der Fig. 2 ein weiteres Ausführungsbeispiel des Fügehilfselementes;
- Fig. 5 und 6: jeweils Ansichten, die die Prozessschritte zur Herstellung der in der Fig. 1 gezeigten Bauteilverbindung veranschaulichen;
- Fig. 7 und 8: jeweils Ansichten eines Fügehilfselements gemäß einem weiteren Ausführungsbeispiel, das im Vergleich zu den Ausführungsbeispielen der Fig. 2 und der Fig. 4 als beste Ausführungsvariante hervorzuheben ist.

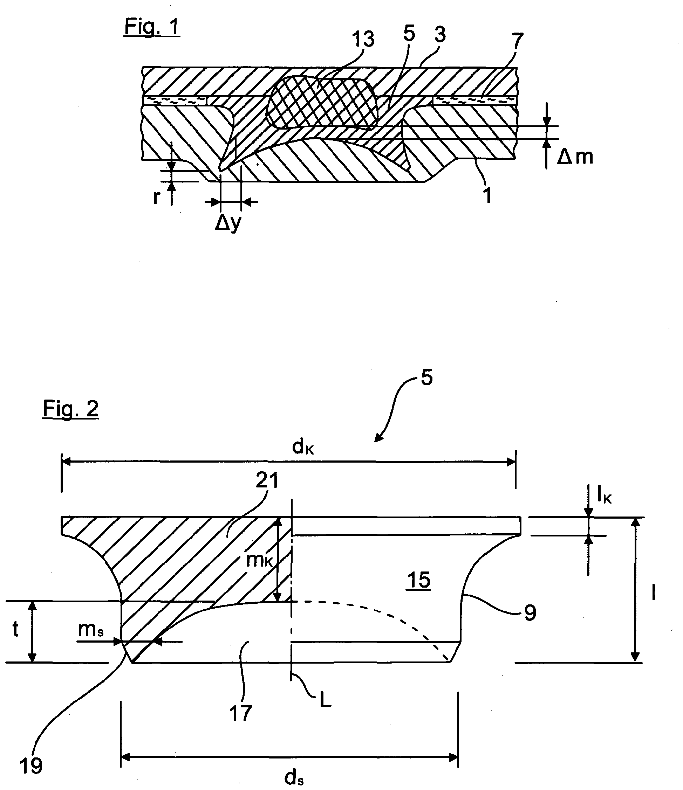

In der Fig. 1 ist eine fertiggestellte Bauteilverbindung gezeigt, bei der ein Aluminiumblechteil 1 als ein erster Fügepartner mit einem Stahlblechteil 3 als ein zweiter Fügepartner verbunden ist. Die beiden Fügepartner 1, 3 sind über ein Fügehilfselements 5 miteinander verbunden. Zudem ist zwischen den beiden Fügepartnern 1, 3 eine Klebschicht 7 vorgesehen. Die obige Materialpaarung ist rein beispielhaft. Alternativ dazu sind auch beliebig andere Werkstoffe denkbar, etwa Magnesium, unter Umständen auch Kunststoffe.

Das Fügehilfselement 5 ist gemäß den Figuren mit einem hohlen Elementschaft 9 sowie einem Elementkopf 11 ausgebildet. In der Fig. 1 ist der Elementschaft 9 unter Aufrechterhaltung einer Restmaterialdicke r in einem später beschriebenen Setzschritt I in das Material des Aluminiumblechteiles (erster Fügepartner) 1 eingetrieben. Der Elementkopf 11 des Fügehilfselementes 5 ist dagegen mit dem zweiten Bauteil (Stahlblechteil) 3 unter Bildung einer Schweißlinse 13 verschweißt.

Der oben erwähnte Setzschritt I ist denkbar in einem vorgelagerten Prozessschritt. Alternativ dazu wäre im Presswerk der Bauteilumformung, kurz danach oder kurz vor dem Schweißprozess. Als Anlage wäre hier ein Roboter oder eine feste Setzvorrichtung für das parallele Setzen mehrerer Elemente geeignet. Dies führt zu höherer Genauigkeit und schnelleren Taktzeiten.

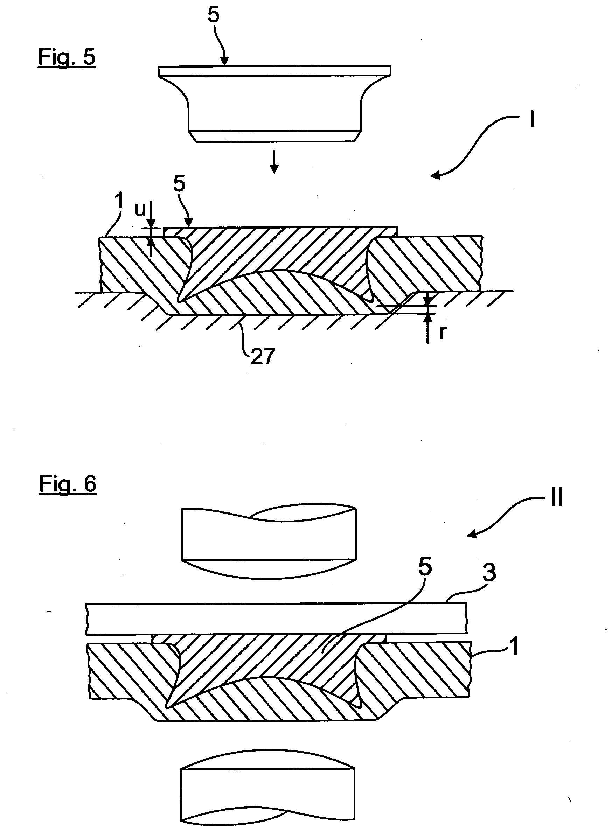

In der Fig. 2 ist das Fügehilfselement 5 in Alleinstellung in einem Fertigungszustand gezeigt. Demzufolge ist das Fügehilfselement 5 beispielhaft um eine Längsachse L rotationssymmetrisch ausgebildet, wobei eine Wandung 15 des Elementschaftes 9 einen bodenseitig offenen, kalottenförmigen Hohlraum 17 begrenzt, der in Axialrichtung mit einer Materialtiefe t in den Elementschaft 9 eingearbeitet ist. Die Elementschaftwandung 15 weist eine Materialstärke mₛ auf, die in der Fig. 2 beispielhaft lediglich in etwa ein Drittel der Elementkopf-Materialstärke m_{K} beträgt, die sich entlang der Längsachse L ergibt. Auf diese Weise ist der Elementkopf 11 mit einer zusätzlichen Materialverdickung 21 ausgebildet, die eine ausreichend große Menge an Schweißmaterial für die Bildung der Schweißlinse 13 bereitstellt. Diese Materialverdickung 21 ist dabei so bemessen, dass nach dem Schweißschritt II (Fig. 6) im Elementkopf 11 eine ausreichend große Materialstärke Δm (Fig. 1) ohne Gefügeänderung verbleibt.

In der Fig. 2 beträgt der Kopfdurchmesser d_{K} 5,5 mm, während der Schaftaußendurchmesser d_{S} bei 3,35 mm liegt. Die Länge I des Fügehilfselementes 5 liegt in der Fig. 2 bei 2,8 mm, wobei eine Kopfseitenhöhe I_{K} bei etwa 0,3 mm liegt.

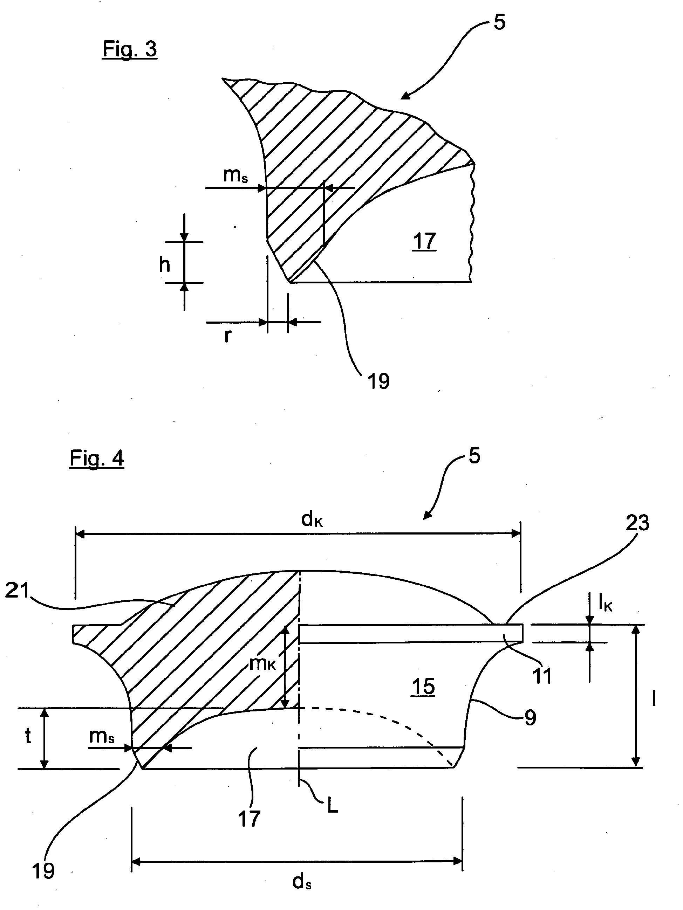

Wie aus der Fig. 2 und 3 weiter hervorgeht, weist das Fügehilfselement 5 an seinem, dem Elementkopf 11 abgewandten Seite einen Elementfuß 19 mit einer Ringkontur auf, die als eine ringförmig umlaufende, spitzwinklige Aufsetzkante ausgeführt ist. Die Aufsetzkante 19 wirkt beim Setzschritt I (Fig. 5) als eine Fußschneide, mit der beim Setzschritt I ein frühzeitiges Verformen des Fügehilfselementes 5 unterbunden wird und gleichzeitig ein Ausspreizen des Elementschaftes 9 um einen vorgegebenen Spreizweg Δy (Fig. 1) radial nach außen gesteuert wird. Bevorzugt sollte der Spreizweg Δy (Fig. 1) bei größer als 0, 1 mm liegen. Ergänzend dazu kann der Hinterschnitt größer 0,1 mm sein, bevorzugt 0,3 mm vor dem Schweißen betragen, damit nach dem Schweißen eine ausreichende Festigkeit des Elements im Fügeteil 1, vorzugsweise Aluminiumfügeteil, vorliegt.

Die hierzu erforderlich Geometrie der Aufsetzkante (Fußschneide) 19 ist aus der Fig. 3 entnehmbar. Demzufolge ist die Aufsetzkante 19 um einen Radialversatz r von der Elementschaft-Außenwand radial nach innen versetzt, wobei der Radialversatz r bei etwa 0,15 mm liegt. Die Höhe h der Ringkontur 19 liegt gemäß der Fig. 3 in etwa bei 0,35 mm. Die hier angegebenen Maße sind lediglich beispielhaft zu verstehen und sollen keinesfalls den allgemeinen Erfindungsgedanken beschränken.

In der Fig. 4 ist in einer Ansicht entsprechend der Fig. 2 ein weiteres Fügehilfselement gezeigt, das im Wesentlichen die gleiche Geometrie wie in der Fig. 2 aufweist, mit Ausnahme des Elementkopfes 11. In der Fig. 4 ist nämlich die Oberseite des Elementkopfes 11 nicht planparallel ausgeführt, sondern vielmehr mit einer kalottenförmigen Materialverdickung 21 (Schweißbuckel) nach oben ausgebaucht. Die kalottenförmige Materialverdickung 21 erstreckt sich nicht bis unmittelbar an den Außenrand des Elementkopfes 11, sondern ist vielmehr über eine planparallele umlaufende Ringschulter 23 vom Außenrand 20 des Elementkopfes 11 beabstandet. Auf diese Weise ist eine mit Bezug auf die Längsachse L zentrale Ausbildung der Schweißlinse 13 gewährleistet.

In der Fig. 5 und 6 ist der Setzschritt I und der darauffolgende Schweißschritt II angedeutet. Demzufolge wird das Fügehilfselement 5 zunächst in einer Fügerichtung in das erste Bauteil (Aluminiumblech) 1 eingetrieben, und zwar unter Aufrechterhaltung der Restmaterialstärke r. Nach erfolgtem Setzschritt I ragt der Elementkopf 11 des Fügehilfselementes 5 mit einem Kopfüberstand u von der Oberfläche des ersten Bauteils 1 vor, der bei 0,3 mm liegt.

Anschließend wird zur Vorbereitung des Schweißschrittes der zweite Fügepartner 3 auf die Oberseite des Fügehilfselementes 5 gelegt, gegebenenfalls mit der zwischen den beiden Fügepartnern 1, 2 vorgesehenen Klebschicht 7. Dann werden die Elektroden 25 zusammengefahren, wobei das Fügehilfselement 5 in Flucht mit den beiden Elektroden 25 ausgerichtet ist, und es erfolgt ein Punktschweißvorgang unter Bildung der Schweißlinse 13 zwischen dem Elementkopf 11 und dem zweiten Fügepartner 3.

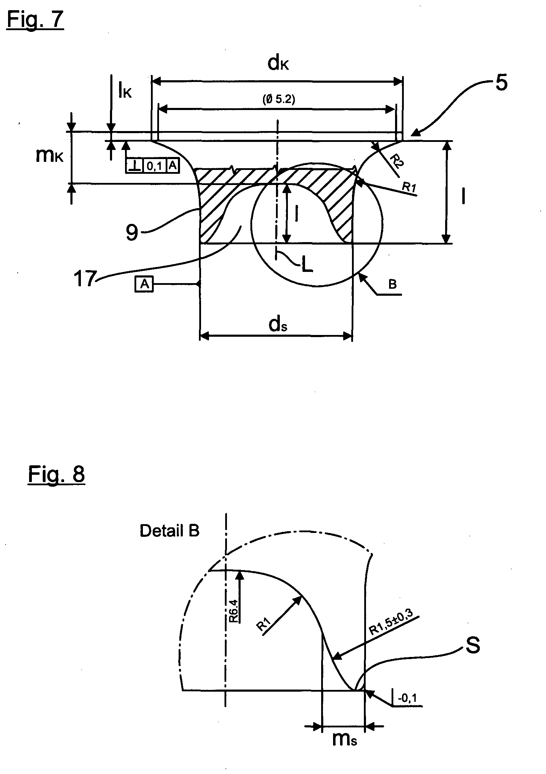

In den Fig. 7 und 8 ist in einer Ansicht entsprechend der Fig. 2 ein Fügehilfselement 5 gezeigt, das im Vergleich zu den Ausführungsbeispielen der Fig. 2 und der Fig. 4 als die beste Ausführungsvariante hervorzuheben ist.

Das in den Fig. 7 und 8 gezeigte Fügehilfeelement 5 weist im Wesentlichen dieselbe Geometrie wie das in der Fig. 2 gezeigte Fügehilfselement 5 auf. Entsprechend ist in der Fig. 7 die Oberseite des Elementkopfes 11 ebenfalls flach ausgeführt.

Im Unterschied zur Fig. 2 und 4 weist in den Fig. 7 und 8 der Elementfuß 19 des Fügehilfselements 5 keine ringförmig umlaufende, spitzwinklige Aufsetzkante (wie in der Fig. 2 bis 4) auf, sondern vielmehr eine abgerundete Aufsetzkante. Deren Aufsetzscheitel S (Fig. 8) ist mit Bezug auf den Außenumfang des Elementschafts 9 um einen Radialversatz nach innen versetzt ist.

In den Fig. 7 und 8 liegt der Kopfdurchmesser d_{K} bei 5,5 mm, während der Schaftaußendurchmesser d_{S} bei 3,35 mm liegt. Die Länge I des Fügehilfselementes 5 liegt in der Fig. 7 bei 2,5 mm, wobei die Kopfseitenhöhe l_{K} bei maximal 0,3 mm liegt. Die Materialstärke m_{K} (Fig. 7) entlang der Längsachse L beträgt 1,3 mm. Die hier angegebenen Maße sind lediglich beispielhaft zu verstehen und sollen keinesfalls den allgemeinen Erfindungsgedanken beschränken.

## Patentansprüche

1. Fügehilfselement für ein Verfahren zum Fügen zumindest zweier Bauteile (1, 3) mit einem Setzschritt (I), bei dem das Fügehilfselement (5) in das erste Bauteil (1) unter Aufrechterhaltung einer Restmaterialstärke (r) eintreibbar ist, und mit einem Fügeschritt (II), bei dem das in das erste Bauteil (1) eingetriebene Fügehilfselement (5) mit dem zweiten Bauteil (3) verbindbar ist, wobei das Fügehilfselement (5) mit einem hohlen Elementschaft (9), der in das erste Bauteil (1) eintreibbar ist, und mit einem Elementkopf (11) ausgebildet ist, der mit dem zweiten Bauteil (3) stoffschlüssig verbindbar ist, das heißt verschweißbar oder verklebbar ist, wobei das Grundmaterial des Fügehilfselements (5) ein schweißgeeigneter Drahtwerkstoff ist, dessen Werkstofffestigkeit bei 950 bis 1100 N/mm² liegt, wobei die Elementschaftwandung (15) eine Materialstärke (mₛ) und der Elementkopf (11) eine Materialstärke (m_{K}) aufweist, **dadurch gekennzeichnet, dass** die Materialstärke (m_{K}) des Elementkopfes (11) gegenüber der Elementschaftwandung (15) erhöht ist, und zwar unter Bildung einer Materialverdickung (21) zur Bereitstellung von Schweißmaterial für eine Schweißlinse (13) zwischen dem Elementkopf (11) und dem zweiten Bauteil (3), und dass die Elementkopf-Materialstärke (m_{K}) zwischen 1 und 1,5 mm ist, der Kopfdurchmesser (d_{K}) zwischen 5 und 7 mm ist, der Schaftaußendurchmesser (dₛ) zwischen 3,0 und 6,5 mm ist, und die Länge des Fügehilfselements (5) zwischen 2,0 und 4,0 mm ist.

2. Fügehilfselement nach Anspruch 1, **dadurch gekennzeichnet, dass** das Fügehilfselement (5) rotationssymmetrisch um eine Längsachse (L) ist, und dass die Elementkopf-Materialstärke (m_{K}) an der Längsachse (L) um das 3-fache größer ist als die Elementschaft-Materialstärke (mₛ).

3. Fügehilfselement nach einem der vorhergehenden Ansprüche, **dadurch gekennzeichnet, dass** der Elementkopf (11) des Fügehilfselements (5) an seiner Oberseite eine zumindest teilweise nach oben kalottenförmig ausgebauchte Materialverdickung (21) aufweist.

4. Fügehilfselement nach einem der vorhergehenden Ansprüche, **dadurch gekennzeichnet, dass** der Kopfdurchmesser (d_{K}) des Elementkopfes (11) um das 1,25- bis 1,5-fache größer ist als der Elementschaftaußendurchmesser (dₛ).

5. Fügehilfselement nach einem der vorhergehenden Ansprüche, **dadurch gekennzeichnet, dass** das Fügehilfselement (5) an seinem, dem Elementkopf (11) abgewandten Elementfuß eine Ringkontur (19) aufweist, die unter Bildung einer ringförmigen Kontaktzone auf das erste Bauteil (1) aufsetzbar ist zur Vorbereitung des Setzschrittes (I).

6. Fügehilfselement nach einem der vorhergehenden Ansprüche, **dadurch gekennzeichnet, dass** das Fügehilfselement (5) mit einer Korrosionsschutzschicht ausgebildet ist zur Vermeidung von Korrosion des Fügeverbunds, und dass das Grundmaterial der Korrosionsschutzschicht Zink, ZnNi oder Almac ist und deren Schichtdicke in einer Größenordnung von 5 µm liegt.

## Claims

1. Joining assistance element for a method for joining at least two structural parts (1, 3) with a placing step (I), in which the joining assistance element (5) can be driven into the first structural part (1) while maintaining a residual material thickness (r), and having a joining step (II) in which the joining assistance element (5) driven into the first structural part (1) can be connected with the second structural part (3), wherein the joining assistance element (5) is designed having a hollow element shaft (9), which can be driven into the first structural part (1) and having an element head (11), which can be connected in material-fitting manner with the second structural part (3), that is, can be welded or adhered, wherein the basic material of the joining assistance element (5) is a wire material suitable for welding, the material strength of which is 950 to 1100 N/mm², wherein the element shaft wall (15) has a material thickness (mₛ) and the element head (11) has a material thickness (mₖ), **characterised in that** the material thickness (mₖ) of the element head (11) is raised in comparison to the element shaft wall (15), specifically with the formation of a material thickening (21) for the preparation of welding material for a weld nugget (13) between the element head (11) and the second structural part (3), and that the element head material thickness (mₖ) is between 1 and 1.5 mm, the head diameter (dₖ) is between 5 and 7 mm, the shaft outer diameter (dₛ) is between 3.0 and 6.5 mm and the length of the joining assistance element (5) is between 2.0 and 4.0 mm.

2. Joining assistance element according to claim 1, **characterised in that** the joining assistance element (5) is rotationally symmetrical about a longitudinal axis (L), and that the element head material thickness (mₖ) at the longitudinal axis (L) is 3 times greater than the element shaft material thickness (mₛ).

3. Joining assistance element according to any of the preceding claims, **characterised in that** the element head (11) of the joining assistance element (5) has on its topside an at least partially upwards dome-shaped bulged material thickening (21).

4. Joining assistance element according to any of the preceding claims, **characterised in that** the head diameter (dₖ) of the element head (11) is 1.25 to 1.5 times greater than the element shaft outer diameter (dₛ).

5. Joining assistance element according to any of the preceding claims, **characterised in that** the joining assistance element (5) has at its element foot facing away from the element head (11) a ring contour (19) which with the formation of a ring-shaped contact zone can be set upon the first structural part (1) in the preparation for the placing step (I).

6. Joining assistance element according to any of the preceding claims, **characterised in that** the joining assistance element (5) is formed with a corrosion protection layer for the avoidance of corrosion of the joining connection, and that the basic material of the corrosion protection layer is zinc, ZnNi or ALMAC, and the layer thickness of which is on a scale of 5 µm.

## Revendications

1. Elément d'aide à l'assemblage pour un procédé d'assemblage d'au moins deux composants (1, 3) avec une étape de pose (I), pour lequel l'élément d'aide à l'assemblage (5) peut être enfoncé dans le premier composant (1) en maintenant une épaisseur de matériau restante (r), et avec une étape d'assemblage (II), pour lequel l'élément d'aide à l'assemblage (5) enfoncé dans le premier composant (1) peut être raccordé au second composant (3), dans lequel l'élément d'aide à l'assemblage (5) est réalisé avec une tige d'élément (9) creuse qui peut être enfoncée dans le premier composant (1), et avec une tête d'élément (11) qui peut être raccordé au second composant (3) par liaison de matière, c'est-à-dire est soudable ou collable, dans lequel le matériau de base de l'élément d'aide à l'assemblage (5) est un matériau de fil approprié au soudage, dont la résistance de matériau se trouve entre 950 et 1100 N/mm², dans lequel la paroi de tige d'élément (15) présente une épaisseur de matériau (mₛ) et la tête d'élément (11) une épaisseur de matériau (m_{K}), **caractérisé en ce que** l'épaisseur de matériau (m_{K}) de la tête d'élément (11) est augmentée par rapport à la paroi de tige d'élément (15), et ce en formant un épaississement de matériau (21) pour la mise à disposition de matériau de soudage pour une lentille de soudage (13) entre l'élément de tête (11) et le second composant (3), et que l'épaisseur de matériau de tête d'élément (m_{K}) est entre 1 et 1,5 mm, le diamètre de tête (d_{K}) est entre 5 et 7 mm, le diamètre extérieur de tige (dₛ) est entre 3,0 et 6,5 mm, et la longueur de l'élément d'aide à l'assemblage (5) est entre 2,0 et 4,0 mm.

2. Elément d'aide à l'assemblage selon la revendication 1, **caractérisé en ce que** l'élément d'aide à l'assemblage (5) est symétrique en rotation autour d'un axe longitudinal (L), et que l'épaisseur de matériau de tête d'élément (m_{K}) sur l'axe longitudinal (L) est 3 fois plus grande que l'épaisseur de matériau de tige d'élément (mₛ).

3. Elément d'aide à l'assemblage selon l'une quelconque des revendications précédentes, **caractérisé en ce que** la tête d'élément (11) de l'élément d'aide à l'assemblage (5) présente sur son côté supérieur un épaississement de matériau (21) bombé au moins partiellement en forme de calotte vers le haut.

4. Elément d'aide à l'assemblage selon l'une quelconque des revendications précédentes, **caractérisé en ce que** le diamètre de tête (d_{K}) de la tête d'élément (11) est 1,25 à 1,5 fois plus grand que le diamètre extérieur de tige d'élément (dₛ).

5. Elément d'aide à l'assemblage selon l'une quelconque des revendications précédentes, **caractérisé en ce que** l'élément d'aide à l'assemblage (5) présente sur son pied d'élément éloigné de la tête d'élément (11) un contour annulaire (19) qui peut être placé en formant une zone de contact annulaire sur le premier composant (1) pour la préparation de l'étape de pose (I).

6. Elément d'aide à l'assemblage selon l'une quelconque des revendications précédentes, **caractérisé en ce que** l'élément d'aide à l'assemblage (5) est réalisé avec une couche de protection contre la corrosion pour éviter la corrosion du composant d'assemblage, et que le matériau de base de la couche de protection contre la corrosion est du zinc, du ZnNi ou de l'almac et dont l'épaisseur de couche se trouve dans un ordre de grandeur de 5 µm.
